# EUROPEAN PATENT APPLICATION

(11) **EP 4 484 188 A1**
(43) Date of publication of application: **01.01.2025**
(21) Application number: 23755726.9
(22) Date of filing: 08.02.2023
(51) Int. Cl.: B60J 7/00

(54) **ROOF SUNROOF ASSEMBLY AND VEHICLE**

(30) Priority: 21.02.2022 CN 202220350574 U
(71) Applicant: Beijing Chehejia Automobile Technology Co., Ltd., Beijing 101300 (CN)
(72) Inventor: GU, Qiming, Beijing 101300 (CN); WANG, Lei, Beijing 101300 (CN); ZHOU, Xidong, Beijing 101300 (CN)
(74) Representative: Maiwald GmbH
(86) International application number: PCT/CN2023/075052
(87) International publication number: WO 2023/155723

(57) **Abstract**

Disclosed are a roof sunroof assembly and a vehicle, comprising a roof, a connector and a sunroof, the roof being provided with an opening, the connector being disposed integrated with the roof, and the sunroof being secured at the roof opening by means of the connector.

## Description

### CROSS-REFERENCE TO RELATED APPLICATION

This application claims priority to Chinese Patent Application No. 202220350574.1, filed on February 21, 2022, the entire content of which is incorporated herein by reference.

### FIELD

The present disclosure relates to the field of vehicle sunroof fixing, and more particularly to a roof sunroof assembly and a vehicle using the roof sunroof assembly.

### BACKGROUND

Vehicles such as commercial SUVs and cars are equipped with sunroofs that not only can meet the needs of ventilation, but also can broaden the field of view. However, in the related art, the sunroof is mostly fixed on a roof of the vehicle through a mushroom buckle, and the assembling of the mushroom buckle is time-consuming, laborious, and costly.

### SUMMARY

The present disclosure is intended to solve at least one of the problems existing in the related art to at least some extent.

Accordingly, embodiments of the present disclosure propose a roof sunroof assembly, which improves the convenience of assembling and reduces the installation cost.

Embodiments of the present disclosure further propose a vehicle using the above roof sunroof assembly.

On the one hand, embodiments of the present disclosure provide a roof sunroof assembly, which includes a roof, a connector, and a sunroof. The roof is provided with a window, the connector is integrally formed with the roof, and the sunroof is fixed at the window of the roof by the connector.

The roof sunroof assembly according to the embodiments of the present disclosure improves the convenience of assembling and reduces the installation cost.

In some embodiments, the connector is provided with an insertion slot, the sunroof is provided with an insertion piece, and the insertion piece is configured to be fitted in the insertion slot to fix the sunroof at the window of the roof.

In some embodiments, the connector has an annular shape, is arranged at the window, and extends and closes along an opening edge of the window, the connector is provided with a plurality of insertion slots arranged at intervals along a circumferential direction of the connector, the sunroof is provided with a plurality of insertion pieces, and the plurality of insertion pieces are fitted in a one-to-one correspondence in the plurality of insertion slots of the connector.

In some embodiments, a plurality of connectors are provided at the window and arranged at intervals along an opening edge of the window, the sunroof is provided with a plurality of insertion pieces, and the plurality of insertion pieces are fitted in a one-to-one correspondence in the insertion slots of the plurality of connectors.

In some embodiments, the insertion slot includes an engaging cavity, the insertion piece is provided with an engaging portion, the engaging portion is fitted in the engaging cavity, and an outer peripheral surface of the engaging portion is configured to be stopped by an inner wall of the engaging cavity to constrain a displacement of the insertion piece in an insertion direction.

In some embodiments, the connector is provided with a lightening hole therein.

In some embodiments, the connector is provided with a first extending portion configured to be connected with the roof.

In some embodiments, the connector is provided with a second extending portion and a third extending portion arranged in intervals, a fitting groove is defined between the second extending portion and the third extending portion, the sunroof is provided with a fitting portion, and the fitting portion is configured to be embedded into the fitting groove to enhance an assembling stability of the connector.

In some embodiments, the connector is provided with a flanging configured to be closely fitted with the sunroof.

On the other hand, embodiments of the present disclosure further provide a vehicle, including a roof sunroof assembly, which may be the roof sunroof assembly according to any one of the above embodiments.

### BRIEF DESCRIPTION OF THE DRAWINGS

Fig. 1 is a schematic view of an overall structure of a roof sunroof assembly according to an embodiment of the present disclosure.
Fig. 2 is a partial enlarged view at a connector in Fig. 1.
Fig. 3 is a schematic view of a connector in Fig. 1.

References signs:
roof 1; fitting portion 11;
connector 2; insertion slot 21; engaging cavity 211; lightening hole 22; first extending portion 23; second extending portion 24; third extending portion 25; fitting groove 26; flanging 27;
sunroof 3; insertion piece 31; engaging portion 311.

### DETAILED DESCRIPTION

Embodiments of the present disclosure are described in detail below, examples of which are shown in the accompanying drawings. The following embodiments described with reference to the accompanying drawing are illustrative. It should be understood that the embodiments described are intended to explain the present disclosure, but not to limit the present disclosure.

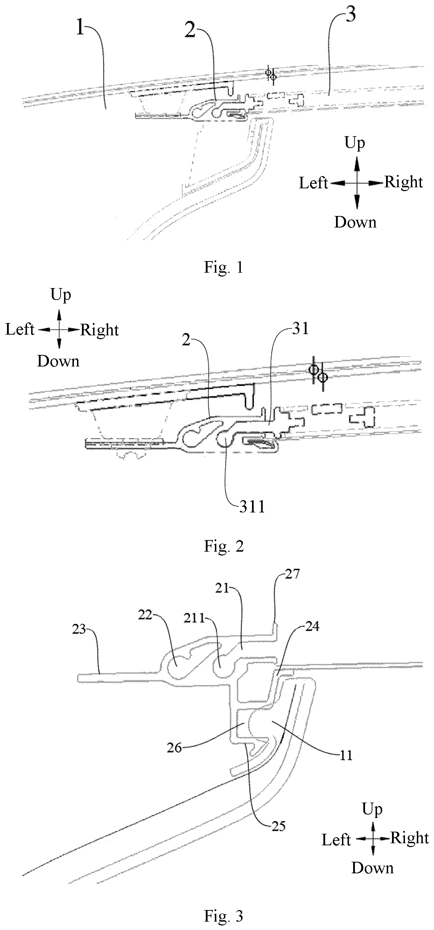

As shown in Figs. 1 to 3, a roof sunroof assembly according to an embodiment of the present disclosure includes a roof 1, a sunroof 3, and a connector 2.

The roof 1 is provided with a window. As shown in Fig. 1, the roof 1 may generally have a shape of a rectangular frame, and may be processed and formed by materials such as metal plates, plastic plates, and hemp fiberboards. The window may be formed in a middle of the roof 1, and the window may be rectangular, circular, square, etc.

The material of the connector 2 may be the same as that of the roof 1, and the connector 2 may be integrally formed with the roof 1 and arranged at the window of the roof 1. The sunroof may be connected and fixed to the roof 1 by the connector 2. For example, the connector 2 may be provided with a fastener, and the sunroof may be provided with a groove. The fastener may be fitted in the groove, thus facilitating the installation and fixation of the sunroof and roof 1.

In the roof sunroof assembly according to the embodiment of the present disclosure, since the connector 2 and the roof 1 are arranged in one piece, it avoids the need to install and fix the connector 2 with the roof 1 first, thus simplifying the installation process and the fixing manner of the sunroof, and improving the convenience of assembling. In addition, compared with a mushroom buckle, the cost of the connector 2 is low, thus also realizing the purpose of reducing the cost and increasing the efficiency.

In some embodiments, the connector 2 is provided with an insertion slot 21, the sunroof is provided with an insertion piece 31, and the insertion piece 31 is configured to be fitted in the insertion slot 21 to fix the sunroof at the window of the roof 1. As shown in Fig. 2, when the sunroof is installed, the insertion piece 31 of the sunroof may be inserted into the insertion slot 21 of the connector 2, thus facilitating the installation and fixation of the sunroof and the roof 1.

In some embodiments, the connector 2 has an annular shape, and is arranged at the window and extends and closes along an opening edge of the window. The connector 2 is provided with a plurality of insertion slots 21 arranged at intervals along a circumferential direction of the connector 2, the sunroof is provided with a plurality of insertion pieces 31, and the plurality of insertion pieces 31 are fitted in a one-to-one correspondence in the plurality of insertion slots 21 of the connector 2.

Specifically, the connector 2 may be an integral structure, and the shape of the connector 2 matches with the shape of the window. For example, when the window is rectangular, the connector 2 may have a shape of a square ring, and the connector 2 may be arranged in a circle along the opening edge of the window. At this time, the connector 2 may be provided with the plurality of insertion slots 21 arranged at equal intervals along the circumferential direction of the connector 2, and a slot opening of each insertion slot 21 is towards an inside of the window.

As shown in Fig. 2, each insertion piece 31 may be embedded on a side wall of the sunroof 3, and the plurality of insertion pieces 31 are evenly arranged at intervals along a circumferential direction of the sunroof 3. When it is necessary to install and fix the sunroof 3 with the roof 1, the insertion pieces 31 of the sunroof 3 may be inserted in a one-to-one correspondence into the insertion slots 21 of the connector 2, thereby achieving the installation and fixation of the sunroof 3 and the roof 1. Thus, the stability and structural strength of the installation of the sunroof at various positions can be ensured.

In some embodiments, a plurality of connectors 2 are provided, the plurality of connectors 2 are arranged at the window and arranged at intervals along the opening edge of the window, the sunroof 3 is provided with the plurality of insertion pieces 31, and the plurality of insertion pieces 31 are fitted in a one-to-one correspondence in the insertion slots 21 of the plurality of connectors 2.

Specifically, the plurality of connectors 2 may be arranged at equal intervals along the opening edge of the window, and each connector 2 may be provided with only one insertion slot 21. The plurality of insertion pieces 31 may be arranged at an outer peripheral side of the sunroof, and may be arranged at intervals along the circumferential direction of the sunroof. When installing the sunroof, the plurality of insertion pieces 31 of the sunroof may be inserted in a one-to-one correspondence into the insertion slot 21 of each connector 2, thus also ensuring the stability and structural strength of the installation of the sunroof at various positions.

In some embodiments, the insertion slot 21 includes an engaging cavity 211, and the insertion piece 31 is provided with an engaging portion 311. The engaging portion 311 is fitted in the engaging cavity 211, and an outer peripheral surface of the engaging portion 311 is configured to be stopped by an inner wall of the engaging cavity 211 to constrain the displacement of the insertion piece 31 in an insertion direction.

As shown in Fig. 3, the engaging cavity 211 may be arranged at a bottom of the insertion slot 21, and a maximum width size of the engaging cavity 211 is slightly larger than a width size of the rest of the insertion slot 21. As shown in Fig. 2, the engaging portion 311 may be located at a free end of the insertion piece 31, and a maximum radial size of the engaging portion 311 is slightly larger than a radial size of the rest of the insertion piece 31.

When the insertion piece 31 is inserted into the insertion slot 21, as shown in Fig. 2, the engaging portion 311 may be fitted in the engaging cavity 211. The inner wall of the engaging cavity 211 may stop the outer peripheral surface of the engaging portion 311, so as to limit the displacement of the insertion piece 31 in an insertion and withdraw direction, thus avoiding the situation that the insertion piece 31 tends to come out of the insertion slot 21, and improving the assembling stability of the sunroof 3.

In some embodiments, as shown in Fig. 3, a cross section of the insertion slot 21 is roughly V-shaped, that is, the insertion slot 21 includes two segments arranged at an angle in a depth direction of the insertion slot, and the shape of the insertion piece 31 matches with the shape of the insertion slot 21, so that the displacement of the insertion piece 31 in the insertion direction may be further constrained, and the assembling stability of the sunroof 3 is improved.

In some embodiments, as shown in Figs. 2 and 3, the engaging cavity 211 is a circular cavity, and the engaging portion 311 has a spherical shape. Therefore, the inner wall of the engaging cavity 211 and the outer peripheral surface of the engaging portion 311 each are curved surfaces, which have a guiding effect, thus not only facilitating the insertion of the insertion piece 31 into the insertion slot 21, but also realizing the limiting effect.

In some embodiments, as shown in Fig. 3, the connector 2 is provided with a lightening hole 22 therein. The lightening hole 22 may reduce the overall weight of the connector 2, which is conducive to reducing the cost and reducing the weight of the whole vehicle.

In some embodiments, the connector 2 is provided with a first extending portion 23 that is configured to be connected with the roof 1. As shown in Fig. 3, an extending direction of the first extending portion 23 may be opposite to an orientation of the slot opening of the insertion slot 21 of the same connector 2, that is, the slot opening of the insertion slot 21 of the connector 2 may be oriented towards a right side, and the first extending portion 23 may be integral with the connector 2 and extends towards a left side. The first extending portion may be integrally formed with the roof 1, thereby achieving the connection and fixation of the connector 2 and the roof 1.

In some embodiments, the connector 2 is provided with a second extending portion 24 and a third extending portion 25 arranged in intervals. A fitting groove 26 is defined between the second extending portion 24 and the third extending portion 25, the sunroof 3 is provided with a fitting portion 11, and the fitting portion 11 is configured to be embedded into the fitting groove 26 to enhance the assembling stability of the connector 2.

As shown in Fig. 3, the second extending portion 24 and the third extending portion 25 each may be arranged on a right side of the connector 2, the second extending portion 24 and the third extending portion 25 are arranged at intervals in an up-down direction, the second extending portion 24 is located between the insertion slot 21 and the third extending portion 25, and an interval between the second extending portion 24 and the third extending portion forms the fitting groove 26. An orientation of a groove opening of the fitting groove 26 is consistent with the orientation of the slot opening of the insertion slot 21, that is, the groove opening of the fitting groove 26 is oriented towards the right side, and the slot opening of the insertion slot 21 is also oriented towards the right side.

The roof 1 is provided with soft materials, such as rubber, as shown in Fig. 3, and part of the soft materials form the fitting portion 11 and are embedded in the fitting groove 26, thereby increasing the connection and fixation positions between the connector 2 and the roof 1, and improving the assembling stability of the connector 2.

In some embodiments, the connector 2 is provided with a flanging 27 arranged at the slot opening of the insertion slot 21 and configured to be closely fitted with the sunroof 3. As shown in Fig. 3, the flanging 27 may be arranged at a top of the connector 2, the flanging 27 is folded towards an upper side of the connector 2, and when in use, the flanging 27 may be closely fitted with the sunroof 3, thereby playing a limiting role.

A vehicle according to an embodiment of the present disclosure is described below.

The vehicle according to the embodiment of the present disclosure includes a roof sunroof assembly, which may be the roof sunroof assembly according to the above embodiments. The vehicle may be a car, a SUV, or other vehicles that need to use the roof sunroof assembly.

In the description of the present disclosure, it should be understood that the orientation or position relationship indicated by the terms "center", "longitudinal", "transverse", "length", "width", "thickness", "up", "down", "front", "rear", "left", "right" , "vertical", "horizontal", "top", "bottom", "inner", "outer", "clockwise", "counterclockwise", "axial", "radial" and "circumferential" and the like, is based on the orientation or position relationship shown in the accompanying drawings, which is only for the convenience of describing the present disclosure and simplifying the description, and does not indicate or imply that the referred device or element must have a specific orientation, and be constructed and operated in a specific orientation, so it cannot be understood as a limitation of the present disclosure.

In addition, the terms "first" and "second" are only used for purpose of description, and cannot be understood as indicating or implying relative importance or implicitly indicating the number of indicated technical features. Therefore, the feature defined as "first" or "second" may explicitly or implicitly include at least one such feature. In the description of the present disclosure, "a plurality of" means at least two, such as two, three, etc., unless otherwise specifically defined.

In the present disclosure, unless otherwise expressly defined, terms such as "install", "interconnect", "connect", "fix" shall be understood broadly, and may be, for example, fixed connections, detachable connections, or integral connections; may also be mechanical or electrical connections or intercommunication; may also be direct connections or indirect connections via intervening media; may also be inner communications or interactions of two elements, unless otherwise specifically defined. For those skilled in the art, the specific meaning of the above terms in the present disclosure can be understood according to the specific situations.

In the present disclosure, unless otherwise expressly defined, the first feature "on" or "under", a second feature may include an embodiment in which the first feature is in direct contact with the second feature, or the first feature is in indirect contact with the second feature through an intermediate media. Moreover, the first feature "above", "on", or "on top of" a second feature may include an embodiment in which the first feature is right or obliquely "above", "on", or "on top of" the second feature, or just means that the first feature is at a height higher than that of the second feature. A first feature "below", "under", or "on bottom of" a second feature may include an embodiment in which the first feature is right or obliquely "below", "under", or "on bottom of" the second feature, or just means that the first feature is at a height lower than that of the second feature.

In the description of the present disclosure, terms such as "an embodiment", "some embodiments", "an example", "a specific example" or "some examples" means that a particular feature, structure, material, or characteristic described in connection with the embodiment or example is included in at least one embodiment or example of the present disclosure. Thus, the appearances of these terms in various places throughout this specification are not necessarily referring to the same embodiment or example of the present disclosure. Furthermore, the particular features, structures, materials, or characteristics may be combined in any suitable manner in one or more embodiments or examples. In addition, without contradiction, those skilled in the art may combine and unite different embodiments or examples or features of the different embodiments or examples described in this specification.

Although the above embodiments have been shown and described, it can be understood that the above embodiments are illustrative and shall not be understood as limitation to the present disclosure, and changes, modifications, alternatives and variations made to the above embodiments by those skilled in the art all fall within the protection scope of the present disclosure.

## Claims

1. A roof sunroof assembly, comprising:
a roof provided with a window;
a connector integrally formed with the roof; and
a sunroof fixed at the window of the roof by the connector.

2. The roof sunroof assembly according to claim 1, wherein the connector is provided with an insertion slot, the sunroof is provided with an insertion piece, and the insertion piece is configured to be fitted in the insertion slot to fix the sunroof at the window of the roof.

3. The roof sunroof assembly according to claim 2, wherein the connector has an annular shape, is arranged at the window, and extends and closes along an opening edge of the window, the connector is provided with a plurality of insertion slots arranged at intervals along a circumferential direction of the connector, the sunroof is provided with a plurality of insertion pieces, and the plurality of insertion pieces are fitted in a one-to-one correspondence in the plurality of insertion slots of the connector.

4. The roof sunroof assembly according to claim 2, wherein a plurality of connectors are provided at the window and arranged at intervals along an opening edge of the window, the sunroof is provided with the plurality of insertion pieces, and the plurality of insertion pieces are fitted in a one-to-one correspondence in the insertion slots of the plurality of connectors.

5. The roof sunroof assembly according to any one of claims 2 to 4, wherein the insertion slot comprises an engaging cavity, the insertion piece is provided with an engaging portion, the engaging portion is fitted in the engaging cavity, and an outer peripheral surface of the engaging portion is configured to be stopped by an inner wall of the engaging cavity to constrain a displacement of the insertion piece in an insertion direction.

6. The roof sunroof assembly according to any one of claims 1 to 5, wherein the connector is provided with a lightening hole therein.

7. The roof sunroof assembly according to any one of claims 1 to 6, wherein the connector is provided with a first extending portion configured to be connected with the roof.

8. The roof sunroof assembly according to any one of claims 1 to 7, wherein the connector is provided with a second extending portion and a third extending portion arranged in intervals, a fitting groove is defined between the second extending portion and the third extending portion, the sunroof is provided with a fitting portion, and the fitting portion is configured to be embedded into the fitting groove to enhance an assembling stability of the connector.

9. The roof sunroof assembly according to any one of claims 1 to 8, wherein the connector is provided with a flanging configured to be closely fitted with the sunroof.

10. A vehicle, comprising a roof sunroof assembly according to any one of claims 1 to 9.
